# EUROPEAN PATENT APPLICATION

(11) **EP 1 674 354 A2**
(43) Date of publication of application: **28.06.2006**
(21) Application number: 05028056.9
(22) Date of filing: 21.12.2005
(51) Int. Cl.: B60R 22/46

(54) **Retractor with multiple level load limiter**

(30) Priority: 21.12.2004 US 18382
(71) Applicant: Takata Seat Belts, Inc., Auburn Hills, MI 48326 (US)
(72) Inventor: Romero, Daniel, Guadalupe 67170 Nuevo Leon (MX)
(74) Representative: HOFFMANN EITLE

(57) **Abstract**

A multi-level energy absorption retractor (10) is provided with a torsion type of energy absorption which is achieved automatically without the use of an independent sensing mechanism and an electrical control to start energy dissipation and/or to shift from one amount of energy absorption to another amount of energy absorption at the time of an accident. First and second torsion elements (54,56), preferably formed in a single torsion bar (22), are utilized with automatic twisting of the first torsion element (54) for an initial predetermined amount of spool rotation and energy absorption and then automatically transitioning to twist the second torsion element (56) for energy absorption at the second level. Preferably, a coupling device (43) sequentially couples the first torsion element for energy absorption at the first level, and then, automatically after a predetermined amount of spool rotation couples the second torsion element for energy absorption at the second level.

## Description

### Field of the Invention

This invention relates to a seat belt retractor that has an inertia sensitive or web sensitive locking mechanism and that has a force limiting device that when the locking mechanism is operated allows energy absorption at different levels or rates.

### Background of the Invention

The use of a multiple level force limiting device in a seat belt retractor is disclosed in a number of patents such as U.S. Patent No. 6,578,786 which is assigned to Takata Corporation and which describes and illustrates in Figures 5a-5b multiple levels of load or energy absorption as a function of the amount of webbing being drawn out during spool rotation after the locking mechanism has been operated at the time of an accident. The retractor of the '786 patent has a shear plate which is operable to break or shear off protrusions of the plate with rotation of the locked reel in emergency conditions. Also, the '786 patent retractor, like the retractor described in U.S. Patent No. 6,568,621, requires separate, disinctly configured load dissipation components for its energy dissipation operations.

In electronically programmable retractors, the shifting from one level to another level of energy absorption particularly when using multiple torsion rod and/or torsion tubes in combination to generate the various absorption levels is done by a switching device that is electrically controlled and operated to then mechanically shift from a first torsion bar/torsion tube to a second torsion bar/torsion tube for the next level of energy absorption or to otherwise combine them. For example, in U.S. Patent No. 6,241,172, various electrically operated switching devices are shown including solenoids, pawls and ratchets, sliding sleeves or ignition sources such as pyrotechnic devices or ignition pills with this retractor also requiring the initial force dissipation mode to be electrically activated.

The use of such electrically operated switching devices adds to the complexity, cost and size of the retractor that is used to provide the multi-level force absorption. Thus, there is a need for a retractor that is simple in its construction and operation such as with an automatic switch between the force levels without having a sensor or detector and an electrically operated switching device, for example, a solenoid or a pyrotechnical device for shifting a lever, sliding a tube or other mechanical devices to switch from the first force level to the second force level. Typically, in these torsion-type of force level absorption retractors, a stopper means is provided to limit the torsion bar from being twisted beyond a limit that would result in the torsion bar being broken or otherwise damaged.

### Summary of the Invention

In accordance with the present invention, a torsion-type multiple level of force dissipation is achieved automatically without the use of an exterior switching mechanism that uses a sensor and an electrical operator to control mechanically, electrically or pyrotechnically, to select one force amount or level of energy absorption and/or to shift from the one force amount or level of energy absorption to a second energy absorption amount or level. Herein, the term "automatic" characterizing the onset of the different energy absorption or dissipation modes has its typical meaning in that these modes occur only or primarily as a function of the mechanical arrangement and interaction of the various retractor components and are not initiated under control of a preprogrammed controller or the like. This is achieved by automatically utilizing a first torsion element for absorbing or dissipating energy at a first level initially for a predetermined amount of turning of a spool due to the passenger's inertia force and thereafter automatically switching to a second torsion element to provide a second different level of energy dissipation with continued turning of the spool during the force limiting operation. This initial force dissipation is initiated automatically once a predetermined passenger loading is placed on the belt webbing and occurs through a predetermined amount of spool rotation due to the inertia force of the passenger and thereafter also automatically changes to the second torsion element and to the second level of energy absorption with continued retractor loading.

In accordance with a preferred form, the seat belt retractor provides different levels of energy for absorption or dissipation of force from the webbing caused by the occupant's inertia moving against the webbing after operation of the retractor emergency locking mechanism and comprises a first torsion element for energy absorption initially at a first level and then uses a coupling device to couple a second torsion element for energy absorption for dissipation at a second level. The shifting by the coupling device occurs automatically after a predetermined amount of spool rotation due to the passenger's inertia force applied to the seat belt.

In another aspect, a single torsion bar is provided with a first portion of the torsion bar having a first predetermined cross-sectional area and a second portion of the torsion bar having a second and differing cross-sectional area. The coupling devices comprise a transition coupling nut which couples or clutches the spool to an intermediate portion of the torsion bar between the first and second torsion portions. This coupling nut is moveable in an axial direction and after a predetermined amount of spool and nut rotation, the nut is shifted axially to a position to decouple the first portion of the torsion bar from the spool allowing the second torsion bar portion to become effective to dissipate energy at the second level. The single torsion bar and transition nut provide a compact and simple force limiting mechanism that may be entirely contained within the retractor spool without requiring a significant increase in the spool size, particularly in the radial direction.

### Brief Description of the Drawings

Figure 1 is a perspective view of a retractor embodying one embodiment of the invention;

Figure 2 is a perspective view of the retractor with the spool shown in phantom lines and illustrating a force limiting device in accordance with an illustrated embodiment;

Figure 3 is an exploded view showing a torsion bar, lock plate, transition nut and bearing;

Figure 4 is a cross-sectional view taken along line 4-4 in Figure 2 and illustrating a locking plate and force limiting device;

Figure 5 is a cross-sectional view showing the torsion bar being twisted to provide a first level of force and illustrating a decoupling movement with the transition nut starting to move towards the lock plate;

Figure 6 is a cross-sectional view illustrating the transition nut decoupled from the torsion bar;

Figure 7 is a cross-sectional view illustrating the transition nut having moved to its stopped position to prevent further twisting of the torsion bar;

Figure 8 is an enlarged elevational view of a torsion bar used in the illustrated embodiment;

Figure 9 is a graph of the load versus the webbing displacement showing a first higher force level of energy absorption being followed by a second lower force level of energy absorption;

Figure 10 is an enlarged cross-sectional view showing the coupling nut abutting a stationary stop surface;

Figure 10A is an enlarged cross-sectional view similar to Figure 10 showing an alternative nut and lock plate in abutting relation;

Figure 11 is a perspective view showing another embodiment of a torsion bar along with the first embodiment of the torsion bar; and

Figures 12-15 are perspective views respectively of a bearing, a transition nut, a locking plate and a spool used with the second embodiment of the torsion bar.

### Detailed Description of the Preferred Embodiment

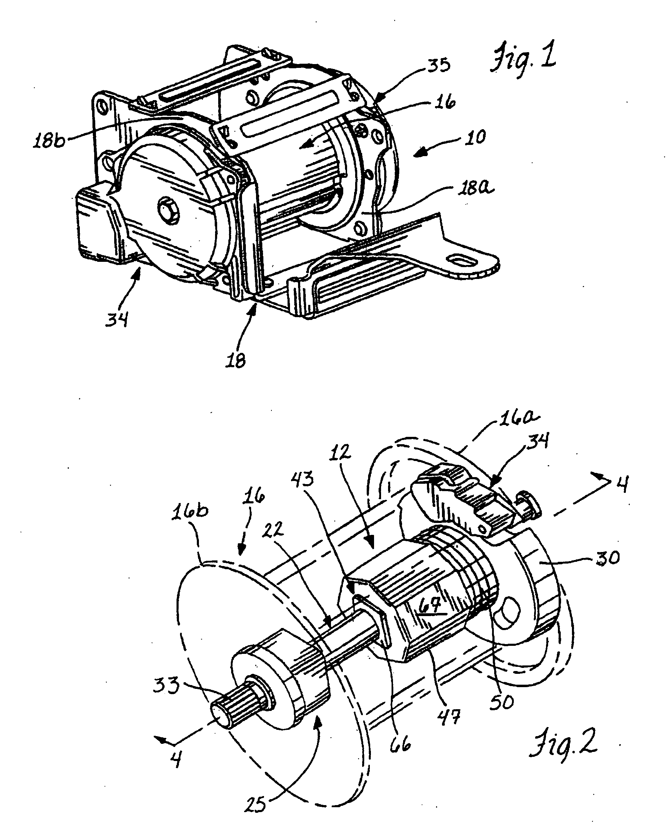

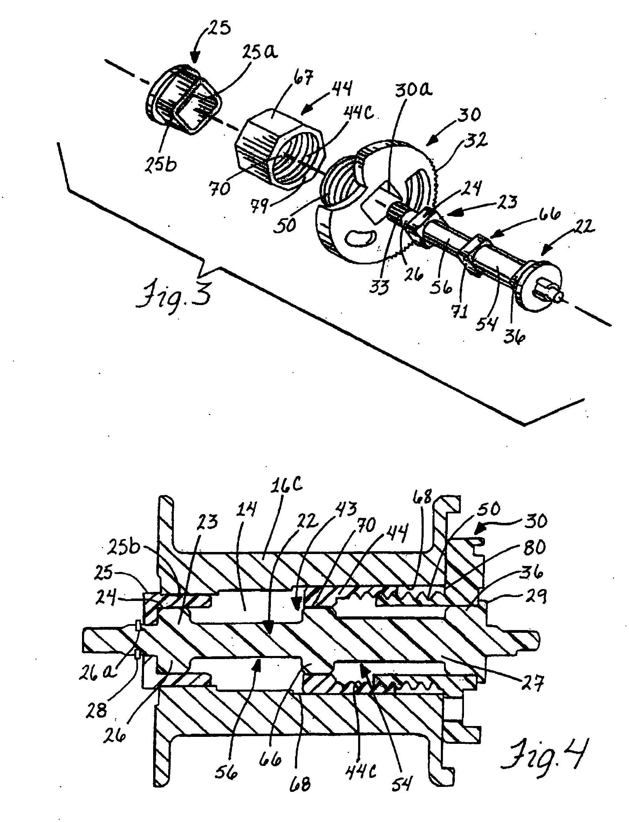

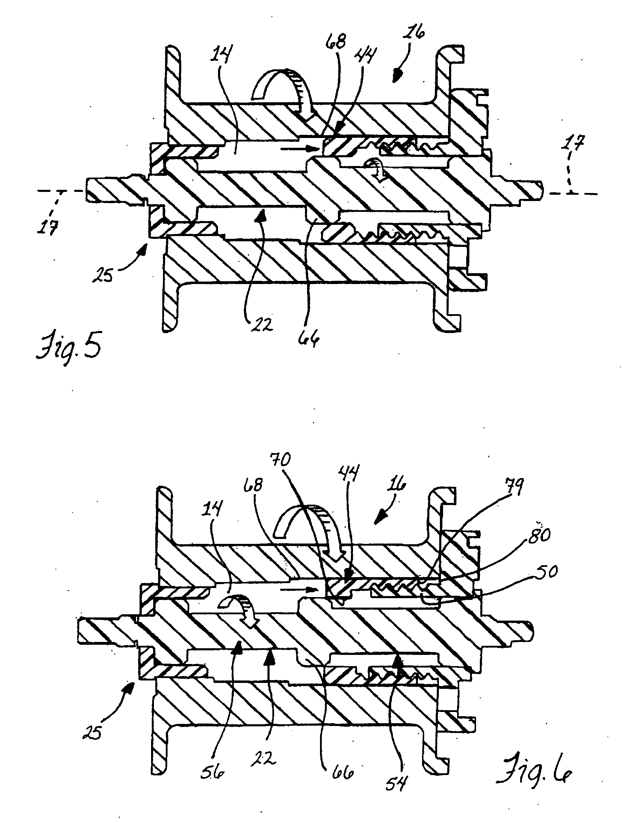

Referring now to the drawings there is shown a seat belt retractor 10 constructed with the force limiting device 12 such as illustrated in Figure 2. The illustrating force limiting device is mounted substantially within a hollow bore 14 of a spool or reel 16 as best seen in Figures 2 and 4-7. The spool is mounted for rotation on a U-shaped frame 18 (Figure 1) having upstanding frame side walls 18a and 18b which rotatably support the spool 16 for rotation. One end of seat belt webbing is connected to a center shaft portion of the spool and the belt or webbing is wound on the shaft portion between spool flanges 16a and 16b having a generally annular spool wall 16c extending therebetween. The inner end of the seat belt is received and secured to the spool in a known manner, such as disclosed in U.S. Patent No. 5,984,223, which is assigned to the Assignee of this invention.

The spool 16 is mounted for rotation about a central axis 17 through its bore 14 on a rotatable shaft such as torsion bar 22 (Figure 3) which has a profiled portion 23 with a contoured surface 24 thereon for fitting into a bearing 25 which has an inner, profiled surface hole 25a to non-rotatably receive the contoured surface 24 on an end 26 of the torsion bar. The bearing has outer profiled surface 25b fitted into a mating square bore portion in the reel. Thus, this end of the reel 16 adjacent the reel sidewall 18b is fixed to rotate with and/or twist this end 26 of the torsion bar. As best seen in Figure 4, this end 26 of the torsion bar is formed with a groove 26a to receive a snap fit retaining ring 28 which is located closely adjacent the bearing 25 to prevent axial movement of the torsion bar as does an enlarged collar 29 at the opposite end 27 of the torsion bar. This other end 27 of the torsion bar 22 extends outside the reel bore 14 to be coupled to a locking plate 30 of a locking mechanism 34 adjacent the spool flange 16a. The rotatable locking plate 30 has an outer tooth locking surface 32, which in this instance is stopped in its rotation by inertia and/or web sensitive devices of the locking mechanism 34 during vehicle emergency conditions such as upon reaching predetermined high level vehicle or web accelerations/decelerations.

The spool 16 is biased to rewind the protracted seat belt by a spring tensioning device 35 (Figure 1) at the end 26 of the torsion bar. Herein, a knurled surface 33 on the end 26 of the torsion bar is fixedly secured in a bore of the spring tensioning device 35 which is positioned on the exterior side of the retractor frame side wall 18a. The web and/or vehicle sensing device 34 is secured to the opposite end 27 of the torsion bar at a location exterior of the frame side plate 18b. The inertia sensitive and/or web sensitive sensing devices for locking the torsion bar 22 and the spool 16 and limiting belt protraction are known and may be of the kind disclosed in U.S. Patent Nos. 5,984,233 and 6,568,621 or other such devices.

For the purpose of stopping rotation of the torsion bar 22 and limiting belt protraction with operation of the web and/or inertia sensitive locking mechanism 34, the locking plate 30 is non-rotatably attached to the end 27 of the torsion bar 22. To this end, a profiled surface 36 in the form of an enlarged, square-shaped projection on the torsion bar is fitted into and mates with a square opening or hole 30a (Figure 3) located at a central axis of the circular-shaped locking plate 30. In normal operation, when the seat belt is being applied by the passenger or taken off, the torsion bar 22 and spool 16 rotate together between and relative to the frame side walls 18a and 18b to protract and retract the seat belt. When the web sensitive and/or inertia sensitive device is operated, the locking plate 30 is held by the locking mechanism 34 from further rotation and holds the first end 27 of the torsion bar 22 against further rotation in the belt protraction direction. Thus, the torsion bar must be twisted about its locked first end 26a when energy absorption occurs in this illustrated embodiment. At the time of an accident where the inertia force of the passenger's body on the seat belt is great enough to turn or twist the torsion bar 22, such as when an air bag is to be employed, the tensioned belt rotates the spool to twist the torsion bar and this twisting dissipates or absorbs some of the kinetic energy that the passenger is exerting on the seat belt.

In accordance with the illustrated embodiment, the passenger's inertia force is absorbed or dissipated at multiple force levels with a first higher force level TBI (Figure 9) occurring initially and preferably before an air bag becomes effective and with a second lower force level TB2 occurring at the time that the air bag is effective. Referring to Figure 9, it can be seen that force dissipation at level TB 1 does not occur until passenger inertia loading on the belt rises sufficiently to twist the torsion bar 22, as described more fully hereinafter. And once the high level of loading occurs, the force limiting device 12 is operable to immediately dissipate energy at this level for a predetermined amount of energy dissipation preferably without prior lower energy dissipation modes. Instead, a lower energy dissipation mode automatically follows the higher dissipation level mode which is useful when an air bag has been deployed, as previously mentioned.

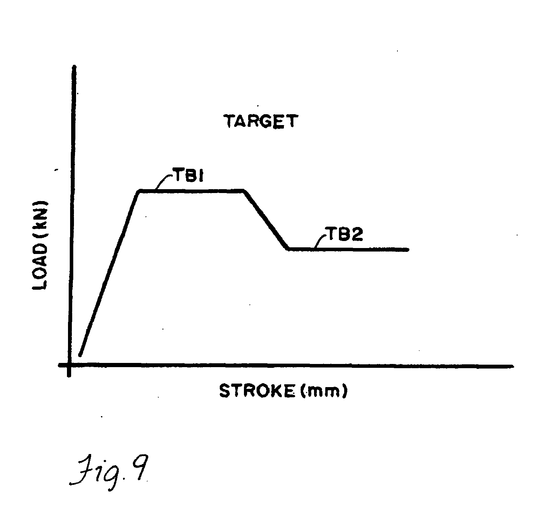

This multi-force level energy absorption or dissipation is achieved by an automatic transition from a first torsion element 54 to a second torsion element 56 with the first torsion element 54 providing the first level TB1 of energy dissipation and the second torsion element supplying the second level TB2 of energy dissipation. Although the torsion elements 54 and 56 could be separate, discrete torsion tubes, torsion bars or the like, the illustrated torsion elements 54 and 56 are integral portions of the same torsion bar 22 each having a different cross-sectional thickness. More specifically, the first torsion element or portion 54 is a thicker cross-sectional portion on the torsion bar on the right hand end of the illustrated torsion bar; and the second torsion element or portion 56 is a thinner cross-section portion of the torsion bar on the left hand, second end of the torsion bar, as seen in these illustrations of Figures 2-8. In this manner, only a single torsion component 22 is needed for torsional deformation that provides the two distinct levels of energy dissipation, TB 1 and TB2. As can be seen, this single torsion bar 22 does not require significant space in the interior space 14 of the spool 16, particularly in the radial direction transverse to spool axis 17.

The shifting between the respective torsion elements 54 and 56 is accomplished automatically without the use of a switching device such as prior art solenoids, pyrotechnical devices, ignition pills or other devices that are electrically operated in a preprogrammed manner to do the switching being multiple force levels. This automatic switching is achieved herein by a coupling or coupling device 43 that automatically is operable to allow twisting of the second torsion element 56 after a predetermined amount of spool turning and twisting of the first torsion element 54. To this end, the first torsion element 54 is coupled by the coupling or coupling device 43 to the spool for initial twisting of the torsion bar and thereafter the coupling device decouples the first torsion element so that the first torsion element no longer is twisted. The continued spool turning and belt protraction by the passenger's inertia force causes a twisting of the second torsion element 56.

In this illustrated embodiment, the coupling 43 comprises a first coupling member in the form of a small transition nut 44 which readily fits in the space between the torsion bar 22 and the spool wall 16c in the spool bore 14 and is connected to a second coupling member in the form of a profiled coupling portion 66 on the torsion bar. Herein, the transition nut 44 has a outer contoured surface 67 which mates with a similar contoured surface 68 formed in the bore 14 of the spool so that as the spool turns the nut also turns. The nut has an inner bore having an inner contoured surface 70 at one end thereof which is mated to a similarly contoured surface 71 on the coupling portion 66 of the torsion bar 22. The bore in the nut also includes a thread 44c which is threaded on threads 50a on a threaded projection 50 which is integral with or otherwise fixed to the locking plate 30.

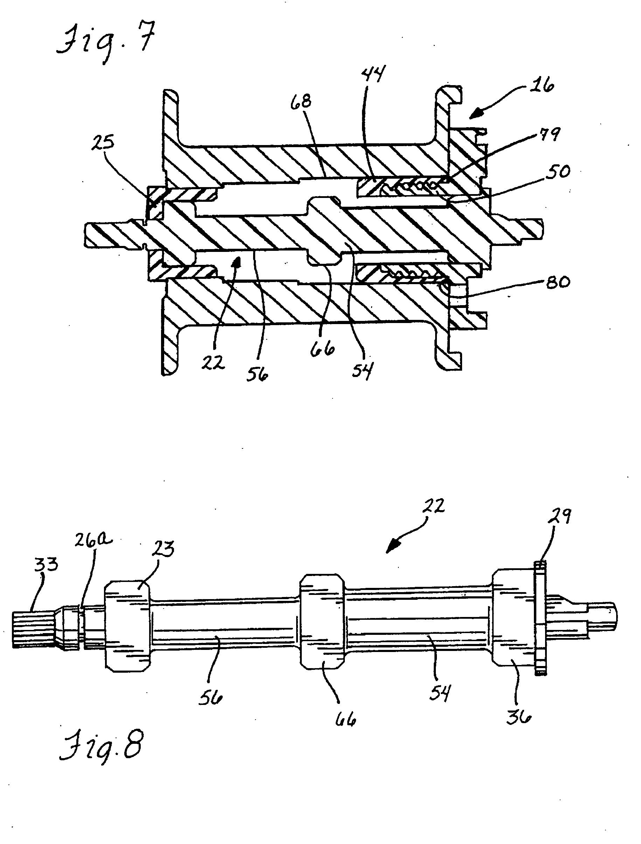

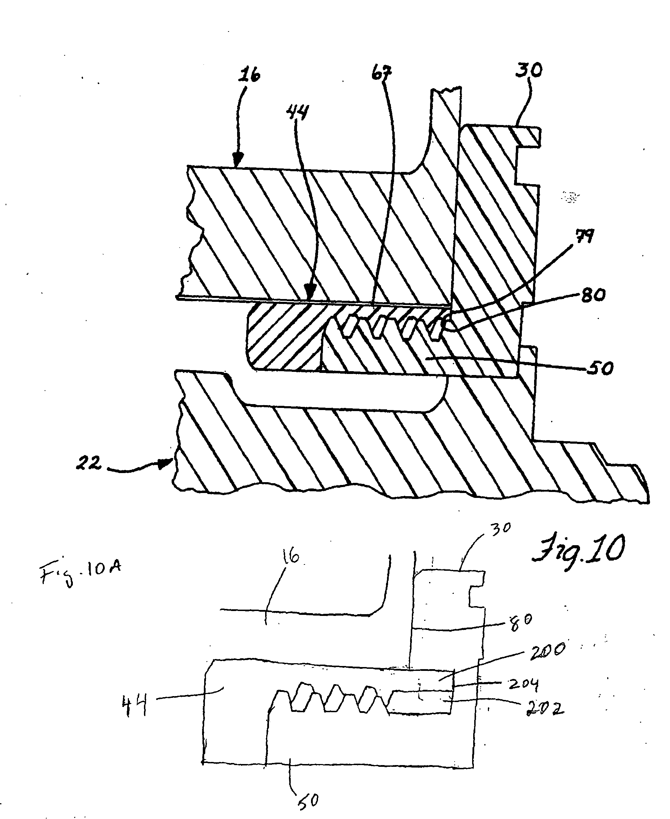

Thus, when the locking plate 30 is stationary and the spool continues to turn due to the passenger's inertia force, the threaded nut moves axially along the threaded projection 50 and axially relative to the torsion bar from an initial engaged or coupled position (Figure 4) to a beginning or disengaging state from the coupling portion 66 although still in a coupled position or state relative thereto (Figure 5) to a decoupled position, as shown in Figure 6. The nut 44 continues to rotate on the threaded projection 50 towards a stopping surface 80 on the locking plate 30 external of the reel bore 14, as will be described hereinafter in connection with Figures 7 and 10.

In accordance with the illustrated embodiment, at the initial onset of a crash or accident when the occupant is restrained only by the seat belt and prior to the deployment of an air bag, if there is one present, the restraining force on the seat belt is held at a first level TB 1 as shown in Figure 9. Continuing reference to Figure 9, as the occupant moves forward into the air bag, the seat belt load limit automatically switches to a second lower level restraining force TB2 that will prevent the risk of the peak load from occurring, as would happen if the restraining forces of the two safety systems were added together. Herein this shifting between the first force level TB 1 and the second force level TB2 is done automatically without the need of an electrical operator and a switching device which may include electrical components and pyrotechnic devices, solenoids or pawl and ratchet mechanisms. As stated above, this is achieved in the illustrated embodiment of the invention when the webbing receives a load such as at a collision or an accident that is more than a predetermined value. Accordingly, it is the occupant's inertia load on the belt that is sufficient to twist the torsion bar that is utilized as the actuating force for switching the retractor from force dissipation level, TB1, to force dissipation level, TB2, as described herein.

Initially, after retractor locking, this load is transferred to the spool and then to the torsion bar 22 through the coupling nut 44. The transition coupling nut is mated at its outer contoured surface 67 to the spool 16 and at its inner contoured surface 70 to the torsion bar coupling portion 66. This forces twisting of the larger cross-sectional area torsion bar portion 54 fixed against rotation relative to the spool 16 at the lock plate end 27 and fixed to rotate with the spool 16 at the enlarged, intermediate torsion bar coupling portion 66. On the other hand, the smaller cross-sectional area torsion bar portion 56 does not twist as it is coupled to the spool 16 at either end 26 and 66 thereof so that the torsion bar portion 56 rotates therewith. In other words, the engaged coupling elements 44 and 66 are operable to specifically disengage or remove the torsion bar portion 56 from the energy dissipation operation. As the nut translates axially relative to the torsion bar 22, with continued twisting of the first torsion element 54 of the torsion bar, crash energy is being absorbed according to the deformation characteristics of this first torsion element. A determinable amount of webbing is permitted to protract off the spool such as, for example, the amount of webbing amounting to one rotation or revolution of the spool 16 before changing to the second force level TB2 based on the pitch of the mating threads 44c and 50a of the nut 44 and lock plate projection 50, respectively.

When the transition nut 44 has moved sufficiently axially to disengage, i.e., decouple from the coupling portion 66 of the torsion bar 22, the spool 16 will start twisting the thinner small diameter portion 56 of the torsion bar with energy being absorbed at the lower level TB2 as shown in Figure 9. This is because the torsion bar 22 is locked against rotation at its end 27 and now only coupled at end 26 for rotation with the spool 16 relative to the locked end 27. Therefore the turning of the end 26 will generate the twisting force on the bar 22 instead of generating this twist force at the intermediate torsion bar portion 66 as in the prior stage of higher energy dissipation. In this manner, this twist force will cause twisting of the smaller, cross-sectional area torsion bar 56 portion as it has less resistance to twisting or torsional deformation than torsion bar portion 54 due to its smaller size relative thereto.

This lower level energy absorption continues through a predetermined amount of revolution of the torsion bar and the spool until the nut 44 is stopped from movement in the axial direction which occurs when the nut is abutted against the locking plate as best seen in Figure 10. At this stopping position, an outer face wall or end 79 of the nut abuts a vertical or radially extending face or stop surface 80 of the locking plate 30 outside the reel bore 14 to terminate the further rotational movement of the spool and the twisting of the torsion bar. When the nut is stopped by the stop surface on the locking plate, the torsion bar becomes rotationally fixed to the locking plate thereby preventing any further twisting that might break or otherwise damage the torsion bar. Referring to Figure 10A, alternatively the nut 44 can be provided with an axial abutment extension 200, and the lock plate 30 has a recess 202 in its surface 80 opening toward and aligned with the extension 200. Figure 10A illustrates the stop position with this arrangement where the nut extension 200 projects far beyond the reel bore 14 and the lock plate surface 80 into the recess 202 so that it abuts against recessed surface 204.

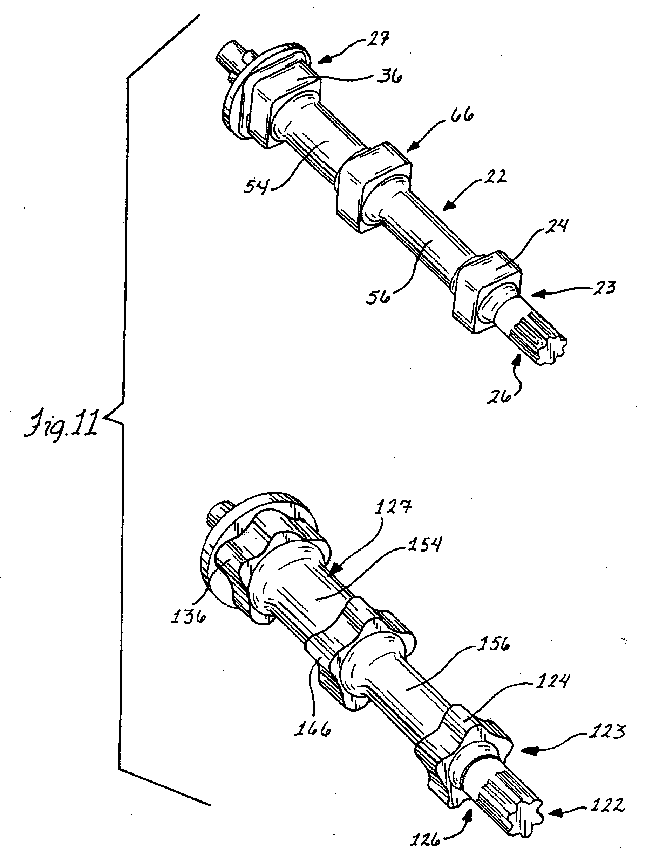

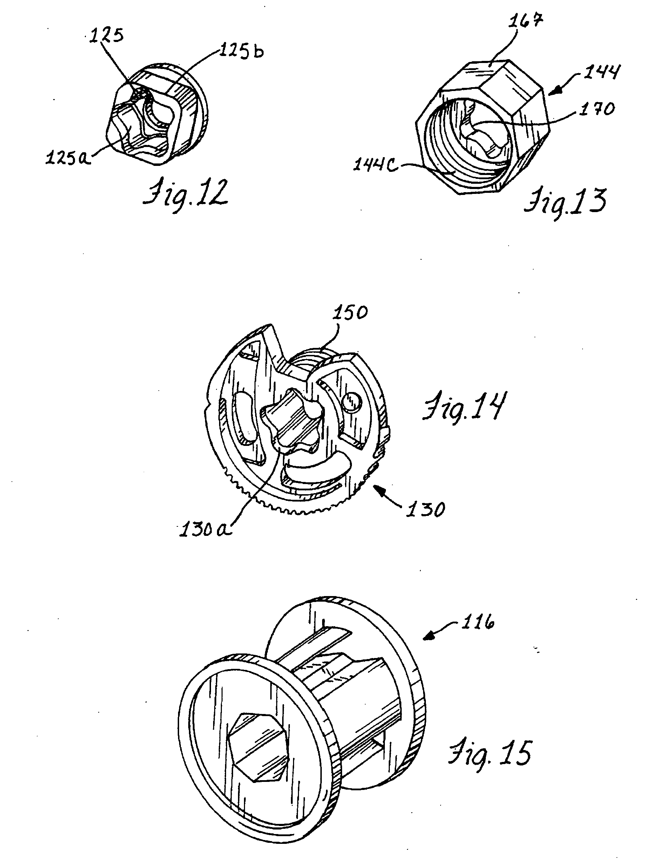

In the embodiment illustrated in Figures 1-9, the respective contoured surfaces 24 and 36 on the opposite ends 26 and 26a of the torsion bar are shown as a square, rectangular surfaces, each with four flat sides to fit into a square holes in the bearing 25 and the locking plate 30. In another embodiment of the invention illustrated in Figure 11, there is shown a second torsion bar 122 which has similar reference characters but with a "one" added thereto. The torsion bar 122 has five curved lobes defining the contoured surface 136 at the end 127 of the torsion bar for fitting into a similarly contoured hole in the lock plate 130 as shown in Figure 14. The opposite end 126 of the torsion bar 122 is attached to the spool 16 through the bearing 125 which is connected to the profiled surface 124 on a projection 123 on the second end of the torsion bar. To this end, in the embodiment of Figure 11, the contoured surface 124 has five curved projecting lobes which are mated into a similarly contoured hole surface 125a in the bearing 125 as shown in Figure 12. The bearing 125, as shown in Figure 12, has a square-shaped outer surface 125b which is mated within the square-shaped bore portion at the end of the spool bore that is located beneath the outer flange 16b of the spool 116. Thus, it will be seen that the contoured projection on the first end of the torsion bar 122 is fixed to the locking plate 30 and that the contoured projection 123 opposite end of the torsion bar 122 is fixed or non-rotatably secured to the bearing 125 and thereby to the other end of the spool opposite the locking plate 116 (Figure 5). Therefore, when the locking plate is locked by the locking device 35, the spool 16 may, under high inertia loading on the belt webbing, apply a twisting force to the bearing 125 and through the bearing to the second end 126 of the torsion bar while the spool is simultaneously applying a twisting force through the coupling device to the central portion of the torsion bar 122.

The torsion bar 122 as shown in Figure 11 has a five lobed coupling member 166 to fit in a five lobe hole 170 in the transition nut 144 as seen in Figure 13. The outer contoured surface of the nut 144 has eight flats thereon which are fitted into a octagon-shaped mating inner surface portion of the spool bore 14 so that the spool is non-rotatably connected to the coupling nut to impart the initial twisting due the occupant's inertia force on the webbing to twist the torsion bar 122 for the initial high level energy absorption TB1 as shown in Figure 9. In this manner, it can be seen that the mating surface between the various engaging components are provided with a greater surface area of contact for transmitting rotational or torsional forces therebetween and/or rotatively interlocking with each other. Nevertheless, it will be appreciated that the coupling elements may take various shapes and forms from a nut and a portion of the torsion bar as in the illustrated embodiment.

It also may be appreciated that the first torsion element 54 may be a separate torsion tube or another separate torsion device other than just the single integral piece of a single torsion bar as disclosed herein which is preferred for its simplicity of parts, low cost and compactness in size. Preferably, to assure an easy, sliding movement as the coupling nut 44 moves axially, the respective contoured surfaces on the nut and coupling portion 66 are coated with a low friction, high pressure coating or lubricant to assure that they do not bind and to assure that the nut is free to move axially during the first energy absorption or dissipation portion of the operation, such as a long Line TB 1 in Figure 9.

Various other modifications than those described and/or illustrated herein may be made and still fall within the purview of the appended claims. For example, a separate tubular member having an externally threaded surface could be substituted for the integral projection 50. Moreover, the separate projection 50 may be fixedly connected by profiled surfaces into a hole in the locking plate 30 rather than having a boss or sleeve which is integral with the locking plate.

The force limiting device illustrated herein may be used in a commercially available retractor C8 sold by the Assignee of this invention and as described in numerous patents of the Assignee of this invention and as such illustrated in U.S. Patent No. 5,984,223. Likewise the attaching of the belt to the spool may be in a manner similar to that disclosed in U.S. Patent No. 5,984,223. Of course, various inertia or webbing sensitive locking mechanisms may be used other than those described herein. A pretensioner (not shown) may also be used with the retractor and the force limiting device of this invention.

It is to be understood that other embodiments of the invention may be made and still fall within the purview of the appended claims.

## Claims

1. A multi-level, energy absorbing or dissipating retractor comprising:
a spool having a seat belt wound thereon for protraction and retraction;
a locking mechanism engageable with the spool and operable to initially stop the spool from rotating in a belt protraction direction;
a first torsion element for absorbing or dissipating energy by turning of the spool due to a passenger's inertia force on the seat belt;
a second torsion element for absorbing or dissipating energy by turning of the spool due to a passenger's inertia force on the seat belt; and
the first and second torsion elements automatically initially absorbing or dissipating energy at a first high level for a predetermined amount of turning of the spool by the passenger's inertia force on the seat belt and upon occurrence of the predetermined amount of spool turning automatically changing to a second lower level of absorption or dissipation of energy with continued turning of the spool by the passenger's inertia force on the seat belt.

2. A retractor in accordance with Claim 1 comprising:
a torsion bar having a first portion functioning as the first torsion element and a second portion functioning as the second torsion element.

3. A retractor in accordance with Claim 2 wherein the first portion of the torsion bar has a first cross-sectional area and wherein the second portion of the torsion bar has a second different cross-sectional area.

4. A retractor in accordance with one of the preceding Claims comprising:
a selective coupling device coupling the spool to the first torsion element for energy absorption at the first level and decoupling the first torsion element after the predetermined amount of spool turning by the inertia force of the passenger on the seat belt.

5. A retractor in accordance with Claim 4 wherein the selective coupling device comprises:
a nut which initially couples the spool to twist the first torsion element through the predetermined amount of spool turning due to the passenger's inertia force and then disengages so the nut is no longer operable to couple the spool for twisting of the first torsion element.

6. A retractor in accordance with Claim 5 comprising:
a torsion bar having the first and second torsion elements formed integrally therewith; and
a contoured portion on the torsion bar substantially nonrotatably engageable with a contoured portion on the nut.

7. A retractor in accordance with Claim 6 wherein the contoured portion on the torsion bar is positioned between the first and second torsion elements of the torsion bar, the nut rotating and translating in an axial direction to disengage from the torsion bar contoured portion after the predetermined amount of spool rotation.

8. A retractor in accordance with Claim 6 or 7 wherein the nut disengages from the contoured portion on the torsion bar after about one revolution of the nut and the spool.

9. A retractor in accordance with one of Claims 5 to 8 comprising:
a threaded member projecting into a bore of the spool and engageable with a thread on the nut for translating the nut in an axial direction; and
a stationary stop surface abutted by the nut to limit the energy absorption or dissipation by the torsion elements.

10. A multi-level, energy absorbing or dissipating retractor comprising:
a spool having a seat belt wound thereon for protraction and retraction;
a locking mechanism engageable with the spool and operable to initially stop the spool from rotating in a belt protraction direction;
a first torsion element for absorbing or dissipating energy by turning of the spool due to a passenger's inertia force on the seat belt;
a second torsion element for absorbing or dissipating energy by turning of the spool due to a passenger's inertia force on the seat belt; and
a coupling for coupling the first and second torsion elements sequentially according to the amount of spool rotation generated by the passenger's inertia force on the belt after operation of the locking mechanism to provide the first and second levels of energy absorption.

11. A seat belt retractor in accordance with Claim 10 wherein the coupling couples the first torsion element for twisting during an initial amount of spool rotation for the first level of energy absorption and then allows the second torsion element to twist during continued spool rotation for energy absorption at the second level.

12. A seat belt retractor in accordance with Claim 10 or 11 wherein the coupling comprising:
coupling elements that disengage from twisting the first torsion element after the initial amount of spool rotation.

13. A seat belt retractor in accordance with one of Claims 10 to 12 wherein the spool has an internal bore and further comprising:
a torsion bar in the spool bore and having the first and second torsion elements as integral portions thereof to keep space requirements for the torsion bar in the spool bore to a minimum.

14. A seat belt retractor for energy absorption or dissipation comprising:
a rotatable spool having a seat belt wound thereon for protraction and retraction and have an internal bore, a first end and a second end;
a locking mechanism moveable to a locking position to initially lock the spool against belt protraction at the time of an accident;
a torsion bar in the bore of the spool and having a first end which is held against rotation by the locking mechanism in its locking position, a second end on the torsion bar connected to the spool to be turned thereby when the first end is being locked against rotation by the locking mechanism;
a first portion on the torsion bar twisted by the spool for energy absorption or dissipation at a first amount after the initial locking of the first end of the torsion bar;
a second portion on the torsion bar twisted by the spool for energy absorption or dissipation by a second amount different from the first amount; and
coupling elements for selectively coupling the spool for twisting the first portion of the torsion bar to cause the first amount of energy absorption or dissipation with initial rotation of the spool after the locking of the first end of the torsion bar by the locking mechanism and decoupling the first portion from the spool after a predetermined amount of spool rotation with the spool turning the second end of the torsion bar and allowing the second portion to twist for absorbing or dissipating energy at the second different amount.

15. A seat belt retractor in accordance with Claim 14 wherein the coupling elements comprise:
a nut on the torsion bar and connectable to the spool to twist the torsion bar while in a coupling position; and
engageable contoured surfaces on the torsion bar and nut axially extending a predetermined extent to twist the first portion of the torsion bar when the contoured surfaces are coupled together in the coupling position;
the nut sliding axially relative to the torsion bar to decouple the nut from twisting the first portion of the torsion bar thereby allowing continued rotation of the spool by the passenger's inertia force to twist the second portion of the torsion bar to absorb energy.

16. A retractor in accordance with Claim 14 or 15 comprising:
the first portion of the torsion bar having a predetermined cross-section;
a second portion of the torsion bar having a cross-section which is smaller than the predetermined cross-section.

17. A retractor in accordance with one of Claims 14 to 16 comprising:
a stopper for limiting the turning of the torsion bar to a predetermined amount of rotational twisting.

18. A retractor in accordance with Claim 17 wherein the stopper comprises:
a thread on the nut;
a stationary threaded projection projecting into the internal bore of the spool and having the nut threaded thereon; and
a stationary stop surface abutted by the nut after traveling on the threaded projection to prevent further twisting of the spool.

19. A retractor in accordance with one of Claims 14 to 18 comprising:
contoured surfaces on the spool and the nut for causing axial direction travel of the nut on the threaded projection to abut the stationary stop surface.

20. A method operating a multi-level energy absorption retractor having a seat belt wound on a spool having a spool bore with first and second torsion elements therein selectively coupled to the spool for providing different levels of energy absorption without use of a remotely operated switching device, comprising:
twisting the first torsion element in the spool bore by inertia force of a passenger when a first end of the retractor is locked to provide a first level of energy absorption;
operating a coupling to transition to a second level of energy absorption after a predetermined amount of rotation of the spool generated by the passenger's inertia force; and
twisting the second torsion element with continued rotation of the spool by the passenger's inertia force after operating the coupling to provide the second, different level of energy absorption.

21. A method in accordance with Claim 20 comprising:
providing a torsion bar with the first and second torsion elements within the bore of the spool; and
positioning the coupling between the spool and the torsion bar in the internal bore of the spool for sequentially coupling the first torsion element and then the second torsion element.

22. A method in accordance with Claim 20 or 21 wherein the coupling is an internal nut in the bore of the spool and the nut has a limited coupling connection between the spool and a coupling portion of the torsion bar; and
shifting the nut axially relative to the coupling portion to break the coupling connection between the torsion bar coupling portion and the spool.

23. A method in accordance with Claim 22 comprising:
shifting the nut axially to a stopping position to limit twisting or deformation of the torsion bar.
